# EUROPEAN PATENT APPLICATION

(11) **EP 2 061 198 A1**
(43) Date of publication of application: **20.05.2009**
(21) Application number: 07022289.8
(22) Date of filing: 16.11.2007
(51) Int. Cl.: H04L 27/26, H04L 1/00

(54) **Method and device for data communication in an optical net-work and communication system comprising such device**

(71) Applicant: Nokia Siemens Networks Oy, 02610 Espoo (FI)
(72) Inventor: Gottwald, Erich, 83607 Holzkirchen (DE); Schmidt, Ernst-Dieter, 83620 Feldkirchen-Westerham (DE); Rohde, Harald, 81673 München (DE)
(74) Representative: Bruglachner, Thomas E.

(57) **Abstract**

A method and a device for data communication in an optical network are provided, wherein (i) data is processed via a multilevel modulation scheme; (ii) the multilevel modulation scheme is based on or comprises an Orthogonal Frequency Division Multiplex (OFDM) modulation scheme or a Phase Shift Keying (PSK); (iii) the optical network is a passive optical network; and (iv) the multilevel modulation scheme changes a number of modulation levels according to a quality of a signal. Further, a communication system comprising such device is provided.

## Description

The invention relates to a method and to a device for data communication in an optical network and to a communication system comprising such a device.

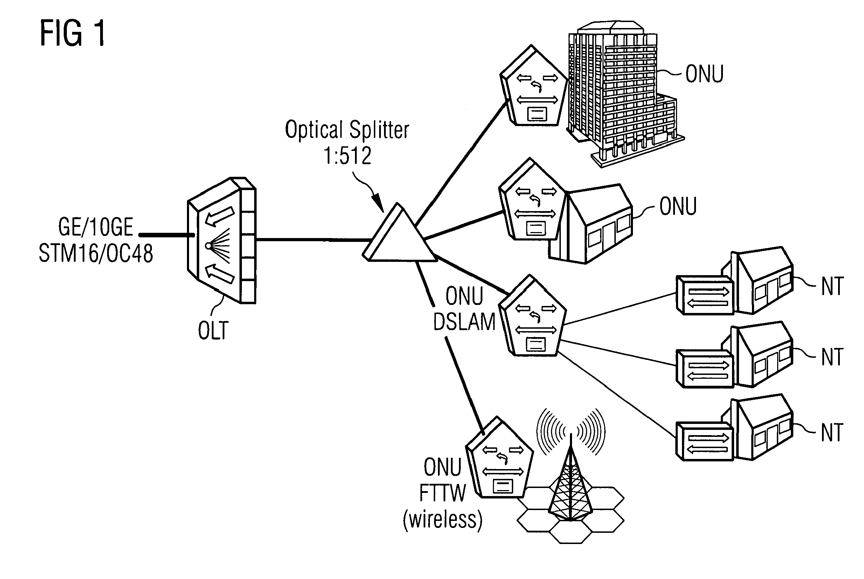

**Fig.1** depicts an exemplary layout of a passive optical network (PON). One single Optical Line Termination (OLT) handles a number of subscriber units (Optical Network Units, ONUs) on a split-fibre infrastructure.

According to Fig.1, a single OLT serves a number of different user-types. Possible users are private users, small/medium enterprises, wireless stations by Fiber To The Wireless (FTTW) and (outdoor) Digital Subscriber Line Access Multiplexers (DSLAMs), which feed a number of DSL users at the Network Terminations (NTs).

The larger the splitting factor, the higher will be the risk of intended or unintended network disturbances.

Today, all users of a PON are connected with substantially uniform quality and length and/or attenuation of the access fiber. With the planned increase of the splitting factor reaching, e.g., 1:512, this uniformity of the access fibres will be lost. The PON Systems are designed such that all users get the same transmission quality, i.e. the user with the worst access line determines the datarates for all other users.

Hence, there is actually no way adapting the optical access line, e.g., based on the actual line quality and/or particular user demands in Passive Optical Networks. All users get the same datarate, determined by the design of the PON.

The problem to be solved is to overcome the disadvantages stated above and in particular to provide a flexible approach to convey data via an optical network.

This problem is solved according to the features of the independent claims. Further embodiments result from the depending claims.

In order to overcome this problem, a method for data communication in an optical network is provided,
- wherein data is processed via a multilevel modulation scheme;
- wherein the multilevel modulation scheme is based on or comprises an Orthogonal Frequency Division Multiplex (OFDM) modulation scheme or a Phase Shift Keying (PSK) ;
- wherein the optical network is a passive optical network;
- wherein the multilevel modulation scheme changes a number of modulation levels according to a quality of a signal.

Hence, the optical network can be utilized by employing said multilevel modulation scheme thereby increasing a range and/or a bandwidth of the optical network.

The quality of the signal may advantageously have an impact on the modulation level. For example, a quadrature amplitude modulation (QAM) with fewer constellations (64QAM instead of 256QAM) can be used in case of a low signal to noise ratio (SNR).

In a next embodiment, the quality of the signal is determined by an optical power.

It is also an embodiment that the multilevel modulation scheme is selected in accordance with the received signal, in particular with a signal to noise ratio of the received signal.

Pursuant to another embodiment, during a start-up of the network, communication terminals start with a low level modulation. Preferably, the low level modulation may be a 2-level modulation. The communication terminals may further successively increase the number of modulation levels per carrier and/or the number of carriers.

According to an embodiment, a datarate provided to a communication terminal is adjusted according to at least one of the following criteria:
- a service level agreement;
- a channel quality, in particular based on an attenuation. Hence, the service level agreement with a customer or a user may determine the bandwidth the user subscribed to. This bandwidth towards this customer can now be provided by the optical network. In addition, based on the channel quality, a different multilevel modulation scheme may be applied and hence a bad (physical) channel can at least partially be compensated.

According to another embodiment, a data format of the multilevel modulation scheme is selected and/or adapted.

In yet another embodiment, any adjustment, selection or adaptation of the datarate and/or the data format is processed by software and/or firmware.

This advantageously allows to change parameters easily without any physical impact to the network or its components. Any such adaptation, adjustment or selection may be done electronically, in particular via software or firmware centrally, in particular from a remote location.

According to a further embodiment, a firmware update at an optical network unit is triggered and/or initiated by an Optical Line Termination.

Hence, in particular new or additional modulation schemes can be provided, e.g., for the OFDM carrier.

The problem stated above is also solved by a device for data communication comprising a processor unit that is equipped and/or arranged such that the method as described herein is executable on said processor unit.

According to an embodiment, the device is a communication device, in particular an optical network element.

The problem stated supra is further solved by a communication system comprising the device as described herein.

Embodiments of the invention are shown and illustrated in the following figure:

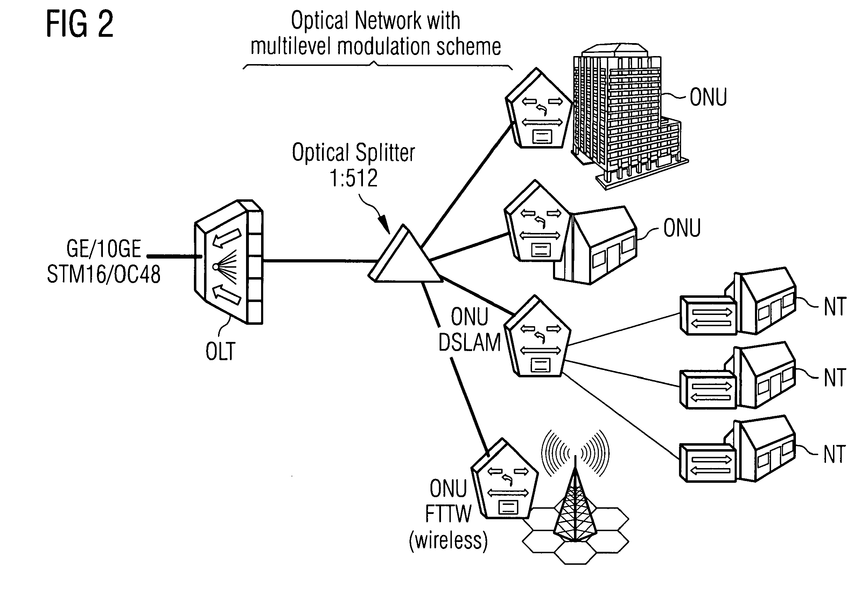

Fig.2 shows a layout of a passive optical network employing a multilevel modulation scheme such as, e.g., OFDM.

The approach provided herewith suggests adaptively using multilevel modulation schemes and in particular to change the number of levels according to the transmitted signal quality.

The modulation scheme may be selected or chosen in accordance with the received signal, in particular with a noise ratio, e.g., an optical signal to noise ratio of the received signal.

During a start-up of the network, the communication terminals assume a worst case transmission line quality and therefore utilize, e.g., a 2-level modulation only. Subsequently, the terminals successively increase the number of levels per carrier and in particular the number of carriers.

According to one particular embodiment of the approach provided herein, an Orthogonal Frequency Division Multiplex (OFDM) modulation scheme is utilized. Hence, a number of orthogonal sub-carriers is used which can be individually adapted to different modulation formats, e.g., 16QAM, 64QAM, 256QAM, etc.

The OFDM scheme may be used in conjunction with a digital single sideband modulation scheme, thus eliminating distortions based on, e.g., optical dispersion. The usual PON-TDMA scheme is used.

Further details on OFDM can be found at [1].

**Fig.2** shows a layout of a passive optical network employing a multilevel modulation scheme such as, e.g., OFDM. The Passive Optical Network (PON) between Optical Line Termination (OLT) and the different Optical Network Units (ONUs) is run by the multilevel modulation scheme, e.g., OFDM. In the example according to Fig.2, various ONUs are connected to the PON such as private users, small and/or medium enterprises. An ONU DSLAM may be used to reach further subscribers via DSL. Further, a wireless station can be connected via FTTW.

A user with a long access fibre obtains a reduced Electrical Signal to Noise Ratio (ESNR) after the opto-electronic conversion and hence gets a lower level modulation of the individual sub-carriers. Each user can get the datarate which fits best to his connection, i.e. datarates can be (dynamically) adapted and/or provided to a particular user via the optical network.

Alternatively, users can be provided with special (premium services) by, e.g., supplying a line with high optical power (e.g., omitting a 1:2 splitter thereby providing this user with twice the optical power) and a respective high bitrate.

Another advantage of this approach is the technologically less complex burst mode receiver. As each OFDM Symbol takes more time compared to an On-Off Keying symbol, the cut-off-frequency of the receiver can be reduced. Also the sensitivity to optical dispersion, which is increasingly affecting PONs with higher bitrates, is significantly reduced.

In addition, the PON can be operated over multimode optical fibres (glass or polymer) which are available at a lower price than single mode fibres.

### Reference (s) :

[1] Wikipedia on OFDM: http://en.wikipedia.org/wiki/Orthogonal_frequency-division_multiplexing

### Abbreviations:

- DSL: Digital Subscriber Line
- DSLAM: Digital Subscriber Line Access Multiplexer
- FTTW: Fiber To The Wireless
- MEMS: Micro-Electro-Mechanical Switch
- NT: Network Termination
- OFDM: Orthogonal Frequency Division Multiplex
- OLT: optical line termination Metro <-> Access Network
- ONU: optical network unit
- OSNR: Optical Signal to Noise Ratio
- PON: passive optical network

## Claims

1. A method for data communication in an optical network,
- wherein data is processed via a multilevel modulation scheme;
- wherein the multilevel modulation scheme is based on or comprises an Orthogonal Frequency Division Multiplex modulation scheme or a Phase Shift Keying;
- wherein the optical network is a passive optical network;
- wherein the multilevel modulation scheme changes a number of modulation levels according to a quality of a signal.

2. The method according to claim 1, wherein the quality of the signal is determined by an optical power.

3. The method according to any of the preceding claims, wherein the multilevel modulation scheme is selected in accordance with the received signal, in particular with a noise ratio and/or a bit error rate of the received signal.

4. The method according to any of the preceding claims, wherein during a start-up of the network, communication terminals start with a low level modulation.

5. The method according to claim 4, wherein the low level modulation is a 2-level modulation.

6. The method according to any of claims 4 or 5, wherein the communication terminals successively increase the number of levels per carrier and/or the number of carriers.

7. The method according to any of the preceding claims, wherein a datarate provided to a communication terminal is adjusted according to at least one of the following criteria:
- a service level agreement;
- a channel quality, in particular based on an attenuation.

8. The method according to any of the preceding claims, wherein a data format of the multilevel modulation scheme is selected and/or adapted.

9. The method according of any of claims 7 or 8, wherein any adjustment, selection or adaptation of the datarate and/or the data format is processed by software and/or firmware.

10. The method according to any of the preceding claims, wherein a firmware update at an optical network unit is triggered and/or initiated by an Optical Line Termination.

11. A device for data communication comprising a processor unit that is arranged such that the method according of any of the preceding claims is executable on said processor unit.

12. The device according to claim 11, wherein said device is a communication device, in particular an optical network element.

13. Communication system comprising the device according to any of claims 11 or 12.
